Europäisches Patentamt

European Patent Office

Office européen des brevets

(11) Veröffentlichungsnummer: **0 416 562 A1**

## (12) EUROPÄISCHE PATENTANMELDUNG

(21) Anmeldenummer: 90117016.7

(22) Anmeldetag: 04.09.90

(51) Int. Cl.5: **B01D 53/34**

(30) Priorität: 06.09.89 DE 3929554

(43) Veröffentlichungstag der Anmeldung:
13.03.91 Patentblatt 91/11

(84) Benannte Vertragsstaaten:
AT BE CH DE DK ES FR GB GR IT LI LU NL SE

(71) Anmelder: SKW TROSTBERG AKTIENGESELLSCHAFT
Dr.-Albert-Frank-Strasse 32
W-8223 Trostberg(DE)

(72) Erfinder: Hirt, Hans-Dieter
Rotdornweg 12
W-2806 Oyten 1(DE)
Erfinder: Griss, Richard, Dr.
Angerweg 6
W-8223 Trostberg(DE)

(74) Vertreter: Huber, Bernhard, Dipl.-Chem. et al
Patentanwälte Dipl.-Ing.H. Weickmann,
Dipl.-Phys.Dr.K. Fincke, Dipl.-Ing.F.A.
Weickmann, Dipl.-Chem.B. Huber, Dr.-Ing.H.
Liska, Dipl.-Phys.Dr.J.Prechtel, Möhlstrasse
22
W-8000 München 80(DE)

(54) Verfahren zur Reduzierung von Schadstoff-Emissionen bei Verbrennungsprozessen.

(57) Zur Reduzierung von Schadstoff-Emissionen, insbesondere $NO_x$-Emissionen, bei Verbrennungsprozessen sprüht man eine wäßrige Lösung von Cyanamid und/oder Hydrogencyanamid-Salzen in feinverteilter Form in den Brennraum ein.

Auf diese Weise werden mit geringem technischen Aufwand auch bei Verbrennungsprozessen mit stark schwankenden Schadstoff-Emissionen Entstickungsgrade von $\geq$ 90 % erreicht.

EP 0 416 562 A1

## VERFAHREN ZUR REDUZIERUNG VON SCHADSTOFF-EMISSIONEN BEI VERBRENNUNGSPROZESSEN

Die Erfindung betrifft ein Verfahren zur Reduzierung von Schadstoff-Emissionen bei Verbrennungsprozessen, insbesondere zur Senkung von $NO_x$-Emissionen.

Es ist bekannt, daß sich die bei der Verbrennung von fossilen Energieträgern oder Müll entstehenden Schadstoff-Emissionen durch Zugabe geeigneter Additive beträchtlich senken lassen.

Bei der Entstickung von Rauchgasen sind neben den katalytischen Verfahren, die aufgrund des großen Platzbedarfs der Katalysatormassen aber technische Probleme aufwerfen, auch nichtkatalytische Verfahren entwickelt worden, wobei vor allem die Anwendung von Ammoniak aufgrund seiner selektiven Wirkung Eingang in die Technik gefunden hat. Nachteilig beim Einsatz des Ammoniaks sind seine schwierige Handhabung und die besonderen Sicherheitsvorkehrungen, wodurch ein großer technischer Aufwand erforderlich wird.

In der DE-OS 29 26 107 wird ein Verfahren zur Abscheidung von Stickoxiden sowie ggf. Halogenen, Schwefel- und/oder Halogenverbindungen aus Gasen beschrieben, bei dem die Gase in Anwesenheit von Wasser bei Temperaturen unterhalb von 80°C über ein Cyanamid oder durch eine Lösung oder Suspension eines Cyanamids geleitet und die Schadstoffe abgeschieden werden. Aufgrund des hohen apparativen Aufwands hat sich dieses Verfahren in der Technik nicht bewährt.

Beim Verfahren der DE-OS 34 47 616 werden als Additive zur gleichzeitigen Entfernung von Schwefel- und Stickoxiden aus Abgasen feingemahlene Mittel auf Basis von Calciumverbindungen mit einem Gehalt von 1 bis 90 Gew.-% Calciumcyanamid, insbesondere Kalkstickstoff, empfohlen. Ganz abgesehen davon, daß das Additiv in feinverteilter Form eingeblasen werden muß, was einen aufwendigen Mahlvorgang erforderlich macht, sind diese Trockenadditive auf Basis von Kalkstickstoff verhältnismäßig reaktionsträge. Dies wirkt sich vor allem bei solchen Gasreinigungsprozessen negativ aus, bei denen eine relativ hohe Reaktionsgeschwindigkeit erforderlich ist.

In der WO 87/02023 wird ein Verfahren zur Reduktion der $NO_x$-Emissionen beschrieben, bei dem man neben einer Reihe von Guanidin- und Harnstoffverbindungen auch Calciumcyanamid in Form einer Lösung in die Abgase bei einer Temperatur von ca. 1100 bis 1370°C einsprüht. Nachteilig bei diesem Verfahren ist, daß sich stabile Calciumcyanamid-Lösungen nur relativ schwer herstellen lassen und daß auf diese Weise nur mäßige Entstickungsraten erreicht werden, die bei nur maximal ca. 50 % liegen.

Der Erfindung liegt daher die Aufgabe zugrunde, ein Verfahren zur Reduzierung von Schadstoff-Emissionen zu entwickeln, welches die genannten Nachteile des Standes der Technik nicht aufweist, sondern mit geringem technischem Aufwand eine wirkungsvolle Reduzierung insbesondere der $NO_x$-Emissionen ermöglicht.

Diese Aufgabe wird erfindungsgemäß dadurch gelöst, daß man eine wäßrige Lösung von Cyanamid und/oder Hydrogencyanamid Salzen in feinverteilter Form in den Brennraum einsprüht.

Es hat sich überraschenderweise gezeigt, daß man auf diese Weise eine wesentlich bessere Reduzierung der $NO_x$-Werte bei Verbrennungsprozessen erreichen kann als bei den bekannten Verfahren auf Basis von Calciumcyanamid als Additiv.

Beim Verfahren der Erfindung wird als Additiv eine wäßrige Lösung von Cyanamid und/oder Hydrogencyanamid-Salzen eingesetzt, wobei als Hydrogencyanamid-Salze die Alkali- und Erdalkalisalze wegen ihrer kostengünstigen Verfügbarkeit als besonders bevorzugt anzusehen sind.

Als Alkalisalze kommen hierbei insbesondere Natrium- und Kaliumhydrogencyanamid in Frage, die nach bekannten Verfahren aus Cyanamid zugänglich sind.

Bei den Erdalkalisalzen werden insbesondere die Calcium- und die Magnesiumhydrogencyanamide verwendet.

Gemäß einer bevorzugten Ausführungsform wird Calciumdihydrogencyanamid ($Ca(HCN_2)_2$) eingesetzt, welches besonders einfach aus einer technischen Kalkstickstoffsuspension durch Abtrennung der überstehenden Lösung vom unlöslichen Rückstand beispielsweise durch Dekantieren oder Filtration hergestellt werden kann. Diese klare Lösung, die im wesentlichen Calciumdihydrogencyanamid enthält, kann ohne weitere Reinigung direkt im erfindungsgemäßen Verfahren verwendet werden.

Die Konzentration der wäßrigen Cyanamid- und/oder Hydrogencyanamid-Lösung kann in weiten Grenzen variiert werden, doch hat es sich aus wirtschaftlichen Gründen als vorteilhaft erwiesen, eine Konzentration von 5 bis 50 Gew.-%, bezogen auf den Cyanamid-Gehalt, einzustellen.

Die erfindungsgemäß eingesetzten wäßrigen Lösungen können auch übliche Stabilisatoren wie Magnesiumsalze gemäß der DE-OS 32 19 054 oder Carbonsäureester gemäß der DE-OS 26 42 043 enthalten, welche die Lagerstabilität der Lösungen verbessern.

Es ist erfindungswesentlich, daß die wäßrigen Behandlungslösungen in feinverteilter Form möglichst gleichmäßig in den Brennraum eingesprüht werden, was mit den üblichen technischen Mitteln wie z.B. Düsen problemlos bewerkstelligt werden kann. Auf diese Weise wird eine optimale Reaktionsgeschwindigkeit bzw. Schadstoffreduzierung erzielt. Die wäßrigen Lösungen können auch mit Hilfe von Trägergasen wie z.B. der Verbrennungsluft, Sattdampf oder sonstigen Gasen, die sich inert verhalten und keine unerwünschten Nebenreaktionen eingehen, versprüht werden. Vorzugsweise werden die wäßrigen Lösungen von Cyanamid und/oder Hydrogencyanamidsalzen bei einem Druck von 1 bis 10 bar in der Weise eingesprüht, daß die Tröpfchen eine Teilchengröße von 100 $\mu$m aufweisen.

Das erfindungsgemäße Verfahren kann in einem weiten Temperaturbereich angewendet werden, wobei Temperaturen von 300 bis 1100 °C, insbesondere 600 bis 1000 °C, bevorzugt sind.

Die zur Reduzierung der Schadstoff-Emissionen erforderliche Menge an Additiv richtet sich im wesentlichen nach den Schadstoffkonzentrationen im Brennstoff und kann folglich in weiten Grenzen variieren. Bei den üblichen Verbrennungsanlagen wie Müllverbrennungsanlagen und Kraftwerken, welche je nach Leistung, Brennstoff und Betriebsbedingungen zwischen 200 und 1300 mg/Nm³ NO$_x$ emittieren, sind normalerweise 1 bis 20 kg Cyanamid pro 1000 Nm³ Abgas erforderlich, um Entstickungsgrade von $\geq$ 90 % zu erreichen. Gleichzeitig findet auch eine deutliche Reduzierung anderer Schadstoffe wie SO$_2$, Halogene oder Halogenwasserstoffe statt. Aufgrund dieser guten Schadstoffreduzierung, der kostengünstigen Additive sowie des geringen technischen Aufwands ist das erfindungsgemäße Verfahren für den großtechnischen Einsatz vor allem auch bei Verbrennungsprozessen mit stark schwankenden Schadstoff-Emissionen hervorragend geeignet.

Die nachfolgenden Beispiele sollen die Erfindung näher erläutern.

Beispiel 1
—

In einer Müllverbrennungsanlage für Haus- und Industriemüll werden bei einer Verbrennung von 9 t Müll pro Stunde ca. 60.000 Nm³/h Abgas mit einem mittleren NO$_x$-Gehalt von 480 mg/Nm³ und einem mittleren Sauerstoffgehalt von 11 % erzeugt.

Eine 25 %ige wäßrige Lösung von Calciumdihydrogencyanamid (hergestellt durch Mischen von 637 g Kalkstickstoff und 880 g Wasser sowie Abtrennen der überstehenden Lösung) wurde in einer Menge von 350 kg/h mit Trägerluft und Zerstäuberluft in den Feuerraum eingedüst (Teilchengröße der Tropfen < 25 $\mu$m). Der NO$_x$-Gehalt im Abgas wird auf 40 mg/Nm³ reduziert, was einem Entstickungsgrad von ca. 92 % entspricht.

Beispiel 2

Bei demselben Verbrennungsprozeß wie in Beispiel 1 beschrieben, werden 350 kg/h einer 25 %igen wäßrigen Cyanamid-Lösung mit Trägerluft und Zerstäuberluft in den Feuerraum eingedüst (Teilchengröße der Tropfen < 25 $\mu$m). Der NO$_x$-Gehalt im Abgas wird auf 50 mg/Nm³ reduziert, was einem Entstickungsgrad von ca. 90 % entspricht.

Ansprüche

1. Verfahren zur Reduzierung von Schadstoff-Emissionen bei Verbrennungsprozessen,
dadurch gekennzeichnet,
daß man in den Brennraum eine wäßrige Lösung von Cyanamid und/oder Hydrogencyanamid-Salzen in feinverteilter Form einsprüht.
2. Verfahren nach Anspruch 1,
dadurch gekennzeichnet,
daß man als Hydrogencyanamid-Salz ein Alkalisalz, insbesondere Natriumhydrogencyanamid, einsetzt.
3. Verfahren nach Anspruch 1,
dadurch gekennzeichnet,
daß man als Hydrogencyanamid-Salz ein Erdalkalisalz verwendet.
4. Verfahren nach Anspruch 3,
dadurch gekennzeichnet,
daß man als Erdalkalisalz Calciumdihydrogencyanamid einsetzt.
5. Verfahren nach einem der Ansprüche 1 bis 4
dadurch gekennzeichnet,
daß man die wäßrige Lösung von Cyanamid und/oder Hydrogencyanamid-Salzen in einer Konzentration von 5 bis 50 Gew.-% bezogen auf den Cyanamid-Gehalt, einsetzt.
6. Verfahren nach einem der Ansprüche 1 bis 5,
dadurch gekennzeichnet,
daß man die wäßrige Lösung mit oder ohne Hilfe von Trägergasen bei einem Druck von 1 bis 10 bar in den Brennraum eindüst.
7. Verfahren nach einem der Ansprüche 1 bis 6,
dadurch gekennzeichnet,
daß man die Teilchendurchmesser beim Einsprühen der Lösung auf < 100 $\mu$m einstellt.
8. Verfahren nach einem der Ansprüche 1 bis 7,
dadurch gekennzeichnet,
daß man bei einer Temperatur von 300 bis 1100 °C einsprüht.
9. Verfahren nach einem der Ansprüche 1 bis 8,
dadurch gekennzeichnet,
daß man die wäßrige Lösung von Cyanamid und/oder Hydrogencyanamid-Salzen in einer Menge von 1 bis 20 kg Cyanamid pro 1000 Nm³ Abgas verwendet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,P | DE-A-3815807 (SKW TROSTBERG AG)<br>* Ansprüche 1, 9-11 *<br>--- | 1, 5-9 | B01D53/34 |
| A,D | WO-A-8702023 (FUEL TECH)<br>* Ansprüche 1-3, 8-11 *<br>--- | 1, 5-9 | |
| A,D | DE-A-2926107 (NUKEM GMBH)<br>* Seite 1-4; Ansprüche 1-4 *<br>----- | 1 | |

**RECHERCHIERTE SACHGEBIETE (Int. Cl.5)**

B01D

Der vorliegende Recherchenbericht wurde für alle Patentansprüche erstellt

| Recherchenort | Abschlußdatum der Recherche | Prüfer |
|---|---|---|
| BERLIN | 03 DEZEMBER 1990 | BERTRAM H.E.H. |

EPO FORM 1503 03.82 (P0403)